# EUROPEAN PATENT APPLICATION

(11) **EP 4 507 360 A1**
(43) Date of publication of application: **12.02.2025**
(21) Application number: 22936145.6
(22) Date of filing: 07.04.2022
(51) Int. Cl.: H04W 24/02

(54) **COMMUNICATION METHOD AND APPARATUS, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/085626
(87) International publication number: WO 2023/193202

(57) **Abstract**

The embodiments of the present disclosure relate to the technical field of mobile communication, and provide a communication method and apparatus, an electronic device, and a storage medium. The communication method is applied to a sensing initiating end, and the method comprises: determining a sensing and measurement establishment termination frame, wherein the sensing and measurement establishment termination frame comprises a first identifier information, and the first identifier information comprises a sensing and measurement establishment identifier of a sensing and measurement process; and sending the sensing and measurement establishment termination frame. The embodiments of the present disclosure provide a method for realizing the termination of a sensing and measurement process.

## Description

### TECHNICAL FIELD

The present disclosure relates to the field of communication technologies, and in particular to a communication method and apparatus, an electronic device, and a storage medium.

### BACKGROUND

With the rapid development of mobile communication technology, a wireless fidelity (Wi-Fi) technology has made tremendous progress in terms of transmission rate as well as throughput. Currently, the Wi-Fi technology is studied in such aspects as 320Mhz bandwidth transmission, aggregation and synergy of multiple frequency bands, etc., which is applied to main application scenarios such as video transmission, augmented reality (AR), and virtual reality (VR).

In the currently studied Wi-Fi technology, it may support a wireless local area network (WLAN) sensing technology, for example, application scenarios such as location discovery, proximity detection, and presence detection in a dense environment (such as home and business environments), During the WLAN measurement process, the device maintains its active state until the sensing measurement process (i.e., sensing measurement setup) is terminated, therefore, there is a need to provide a way to achieve the termination of the sensing measurement setup, so as to improve the WLAN measurement process.

### SUMMARY

Embodiments of the present disclosure provide a communication method and apparatus, an electronic device, and a storage medium, to provide a way to achieve the termination of the sensing measurement setup.

According to an aspect of the embodiments of the present disclosure, there is provided a communication method, performed by a sensing initiator, and including:
determining a sensing measurement setup termination frame, where the sensing measurement setup termination frame includes first identifier information, and the first identifier information includes a sensing measurement setup identifier for sensing measurement setup; and
transmitting the sensing measurement setup termination frame.

According to another aspect of the embodiments of the present disclosure, there is provided a communication method, performed by a sensing responder, and including:
receiving a sensing measurement setup termination frame, and transmitting a response message frame to a sensing initiator, where the sensing measurement setup termination frame includes first identifier information, and the first identifier information includes a sensing measurement setup identifier for a sensing measurement setup; and
terminating the sensing measurement setup corresponding to the sensing measurement setup identifier.

According to another aspect of the embodiments of the present disclosure, there is provided an electronic device, which is a sensing initiator, and includes:
a determination module, configured to determine a sensing measurement setup termination frame, where the sensing measurement setup termination frame includes first identifier information, and the first identifier information includes a sensing measurement setup identifier for sensing measurement setup; and
a transmitting module, configured to transmit the sensing measurement setup termination frame.

According to another aspect of the embodiments of the present disclosure, there is provided an electronic device, which is a sensing responder, and includes:
a receiving module, configured to receive a sensing measurement setup termination frame, and transmit a response message frame to a sensing initiator, where the sensing measurement setup termination frame includes first identifier information, and the first identifier information includes a sensing measurement setup identifier for sensing measurement setup; and
a termination module, configured to terminate the sensing measurement setup corresponding to the sensing measurement setup identifier.

According to another aspect of the embodiments of the present disclosure, there is provided a communication apparatus, applied to a sensing initiator, and including:
a termination frame determination module, configured to determine a sensing measurement setup termination frame, where the sensing measurement setup termination frame includes first identifier information, and the first identifier information includes a sensing measurement setup identifier for a sensing measurement setup; and
a termination frame transmitting module, configured to transmit the sensing measurement setup termination frame.

According to another aspect of the embodiments of the present disclosure, there is provided a communication apparatus, applied to a sensing responder, and including:
a termination frame receiving module, configured to receive a sensing measurement setup termination frame, and transmit a response message frame to a sensing initiator, where the sensing measurement setup termination frame includes first identifier information, and the first identifier information includes a sensing measurement setup identifier for a sensing measurement setup; and
a measurement termination module, configured to terminate the sensing measurement setup corresponding to the sensing measurement setup identifier.

The embodiments of the present disclosure further provide an electronic device, including a processor, and a memory storing computer programs executable by the processor, where the computer programs, when executed by the processor, cause the processor to perform any of the methods in the embodiments of the present disclosure.

The embodiments of the present disclosure further provide a computer-readable storage medium, storing computer programs thereon, where the computer programs, when executed by a processor, cause the processor to perform any of the methods in the embodiments of the present disclosure.

In the embodiments of the present disclosure, the sensing measurement setup termination frame is determined, the first identifier information is carried in the sensing measurement setup termination frame, the first identifier information includes the sensing measurement setup identifier for sensing measurement setup, and the sensing measurement setup termination frame is transmitted to achieve the termination of the sensing measurement setup, so as to improve the WLAN measurement process.

Additional aspects and advantages of the embodiments of the present disclosure will be described, in part, in the following description, and these will become apparent from the following description or learned through the implementation of the present disclosure.

### BRIEF DESCRIPTION OF THE DRAWINGS

To describe the technical solutions of the embodiments of the present disclosure more clearly, the following briefly introduces the accompanying drawings required for describing the embodiments. Apparently, the accompanying drawings in the following description show only some embodiments of the present disclosure, and a person of ordinary skill in the art may still derive other drawings from these accompanying drawings without inventive efforts.
FIG. 1 is a flowchart illustrating a communication method according to an embodiment of the present disclosure.
FIG. 2 is a schematic diagram of a first example of an embodiment of the present disclosure.
FIG. 3 is another schematic diagram of the first example of the embodiment of the present disclosure.
FIG. 4 is yet another schematic diagram of the first example of the embodiment of the present disclosure.
FIG. 5 is a schematic diagram of a second example of an embodiment of the present disclosure.
FIG. 6 is a flowchart illustrating a communication method according to another embodiment of the present disclosure.
FIG. 7 is a schematic structural diagram illustrating an electronic device according to an embodiment of the present disclosure.
FIG. 8 is a schematic structural diagram illustrating an electronic device according to another embodiment of the present disclosure.
FIG. 9 is a schematic structural diagram illustrating an electronic device according to yet another embodiment of the present disclosure.

### DETAILED DESCRIPTION OF THE EMBODIMENTS

The wording "and/or" in the present disclosure describes an association relationship of an associated object, and indicates that three relationships may exist, e.g., A and/or B, which may be expressed as: A alone, both A and B, and B alone. The character "/" generally indicates an "or" relationship between the related objects.

The wording "plurality" in the present disclosure means two or more, and other quantifiers are similar.

Examples will be described in detail herein, with the illustrations thereof represented in the drawings. Where the following description relates to the drawings, unless otherwise indicated, the same numerals in different drawings represent the same or similar elements. Implementations described in the following examples do not represent all implementations consistent with the present disclosure. On the contrary, they are examples of an apparatus and a method consistent with some aspects of the present disclosure described in detail in the appended claims.

The terminology used herein is for the purpose of describing particular embodiments only and is not intended to be limiting of the present disclosure. As used herein, the singular forms "a", "said" and "the" are intended to include the plural forms as well, unless the context clearly indicates otherwise. It will also be understood that as used herein, the term "and/or" is and includes any or all combinations of one or more of the associated listed items.

It will be understood that while terms such as "first", "second", "third", etc. may be used to describe to describe various information, such information should not be limited to these terms. These terms are used only to distinguish the same type of information from each other. For example, without departing from the scope of the present disclosure, a first information may also be referred to as a second information, and similarly, a second information may also be referred to as a first information. Depending on the context, as used herein, the wording "if' may be interpreted as "while ..." or "when ..." or "in response to a determination".

The following clearly and completely describes the technical solutions in the embodiments of the present disclosure with reference to the accompanying drawings in the embodiments of the present disclosure. The described embodiments are some of the embodiments of the present disclosure rather than all of the embodiments. All other embodiments obtained by a person of ordinary skill in the art based on the embodiments of the present disclosure without creative efforts shall fall within the protection scope of the present disclosure.

Embodiments of the present disclosure provide a communication method and apparatus, an electronic device, and a storage medium, to provide a way to achieve the termination of the sensing measurement setup.

The method and the apparatus are based on the same conception, and since the method and the apparatus solve problems on similar principles, the implementations of the apparatus and the method can be referred to each other, and the repetitions will not be repeated.

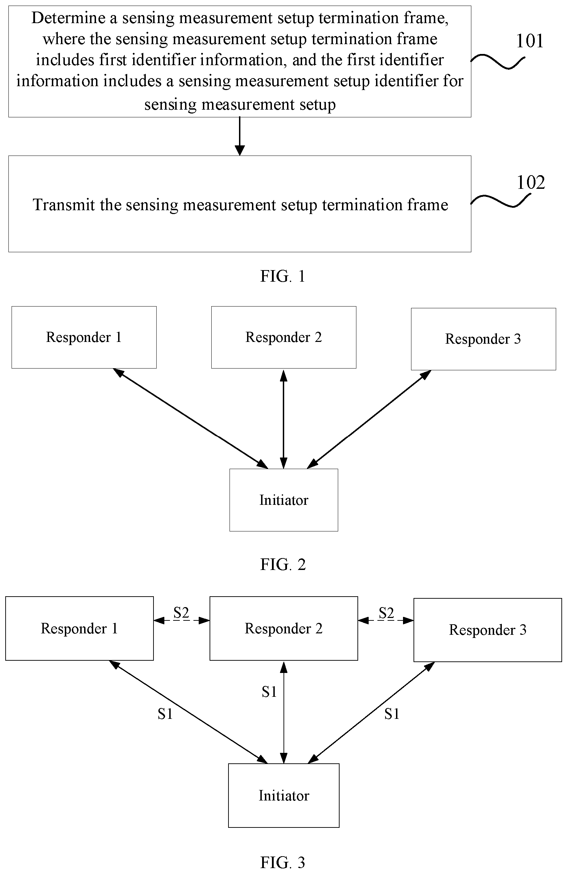

An embodiment of the present disclosure provides a communication method, which is applied to an electronic device, and as shown in FIG. 1, the method may include the following steps 101 to 102.

At step 101, a sensing measurement setup termination frame is determined, where the sensing measurement setup termination frame includes first identifier information, and the first identifier information includes a sensing measurement setup identifier for sensing measurement setup.

As a first example, referring to FIGS. 2 to 4, firstly, the architecture for WLAN sensing and the WLAN sensing process of the communication method provided by the embodiment of the present disclosure are introduced.

FIG. 2 shows a schematic diagram of an architectural for WLAN sensing. A sensing initiator initiates the WLAN sensing (for example, initiating WLAN sensing session), and there may be a plurality of sensing responder (or sensing receiver) responding to the sensing initiator, for example, a Responder 1, a Responder 2 and a Responder 3 as shown in FIG. 2. When the sensing initiator initiates the WLAN sensing, the plurality of sensing responders for associated or unassociated WLAN sensing may respond.

Referring to FIG. 3, the sensing initiator and the sensing responder communicate through a communication connection, as shown a communication connection S1. The sensing responders communicate with each other through a communication connection S2.

A sensing initiator may be a client, and a sensing responder (in this example, the sensing responder 1 to the sensing responder 3) may be a station (STA) device. In addition, a STA and an access point (AP) can assume multiple roles in the WLAN sensing process. For example, in the WLAN sensing process, the STA can also serve as a sensing initiator, which may be a sensing transmitter, a sensing receiver, or both, or neither. In the WLAN sensing process, the sensing responder may also be a sensing transmitter, a sensing receiver, or both.

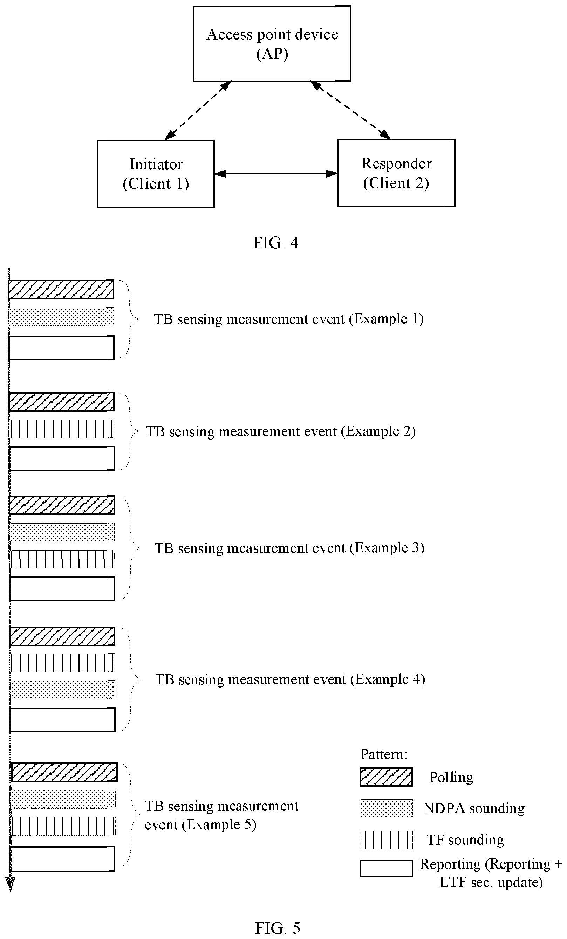

As another architecture, as shown in FIG. 4, the sensing initiator and the sensing responder can also be both clients, and they can communicate with each other by connecting to the same access point (AP) device. In FIG. 4, a client 1 is a sensing initiator, and a client 2 is a sensing responder.

Generally, the WLAN sensing process includes WLAN sensing session setup, WLAN sensing measurement setup and WLAN sensing measurement setup termination. The WLAN sensing process typically includes a trigger based (TB) sounding approach as well as a non-TB based sensing approach. Specifically, the TB-based approach means that the AP is an initiator or a transmitter, and the non-TB based approach means that the STA is an initiator or a transmitter. Specifically, as a second example, FIG. 5 illustrates a plurality of sensing measurement events (or sensing measurement instances) for a sensing measurement process (sensing measurement setup) in a TB based scenario; where each of the sensing measurement events in examples 1 to 5 includes a polling, a sounding, and a reporting ( Reporting + Long Training Field (LTF) sec. update) ; specifically, in each example, the sounding may include one of a null data packet announcement (NDPA) sounding and a trigger frame (TF) sounding, and may include the two.

In the TB based scenario, the sensing responder will maintain the active state until the sensing measurement process is terminated, so there is a need to provide a way to terminate the sensing measurement process. During sensing measurement setup, the sensing initiator and each sensing responder establish a sensing measurement process one by one. In the embodiments of the present disclosure, for the sensing measurement setup termination, the sensing initiator can terminate the sensing measurement process with these sensing responders without having to terminate them one by one. Specifically, the sensing initiator determines a sensing measurement setup termination frame. In an embodiment, the sensing measurement setup termination frame may be a trigger frame, which is mainly used for scheduling of stations and allocation of resource units (RUs). For example, in a transmission mechanism based on an orthogonal frequency division multiple access (OFDMA) technology, uplink-OFDMA (UL-OFDMA) transmission or downlink-OFDMA (DL-OFDMA) transmission require the use of trigger frame to realize the exchange of scheduling information between multi-user communications.

First identifier information is carried in the sensing measurement setup termination frame. The first identifier information includes a sensing measurement setup identifier (ID) for sensing measurement process (sensing measurement setup). A sensing measurement process to be terminated is identified by the sensing measurement setup ID. The sensing measurement setup termination frame may carry one or more pieces of first identifier information. For example, when the sensing measurement process to be terminated is one in number, the sensing measurement setup termination frame may carry one sensing measurement setup ID; when the sensing measurement process to be terminated is at least two in number, the sensing measurement setup termination frame may carry at least two sensing measurement setup IDs. It will be understood that terminating a sensing measurement process corresponding to a sensing measurement setup ID will not affect sensing measurement processes corresponding to other sensing measurement setup IDs, that is, terminating a sensing measurement setup identified by a sensing measurement setup ID will not affect the device/session activity of another sensing measurement process with a different sensing measurement setup ID.

It will be noted that in the embodiments of the present disclosure, a sensing measurement process refers to a sensing measurement setup, and each sensing measurement process corresponds to a sensing measurement setup ID.

At step 102, the sensing measurement setup termination frame is transmitted.

The sensing measurement setup termination frame is transmitted to the sensing responder corresponding to the sensing measurement setup identifier, in this way, when the sensing measurement setup termination frame carries at least two sensing measurement setup IDs, the sensing initiator achieves the termination of a plurality of sensing measurement processes by transmitting the sensing measurement setup termination frame once, i.e., by a single signaling interaction, such that a number of signaling interactions is reduced, the effective utilization of the spectrum is improved, and the power consumption of the sensing initiator is reduced.

In the embodiments of the present disclosure, the sensing measurement setup termination frame is determined, the first identifier information is carried in the sensing measurement setup termination frame, the first identifier information includes the sensing measurement setup identifier for sensing measurement setup, and the sensing measurement setup termination frame is transmitted to achieve the termination of the sensing measurement setup, so as to improve the WLAN measurement process.

In an embodiment, the sensing measurement setup termination frame includes at least one station information (STA Info) field. The STA Info field includes an association identifier (AID), a user identifier (UID), and/or resource information of communication resource, where the communication resource is for the sensing responder to transmit the response message frame corresponding to the sensing measurement setup termination frame.

The STAInfo field includes at least one of the AID, the UID, or the resource information. The AID and/or the UID are used to indicate the identity information of the sensing responder. The communication resource (or network resource) is used for the sensing responder to transmit a response message frame corresponding to the sensing measurement setup termination frame, that is, when the sensing responder feeds back the response message frame for the sensing measurement setup termination frame to the sensing initiator, the response message frame will be transmitted within the communication resource indicated by the resource information. Further, when the sensing measurement setup termination frame includes a STA Info field, the communication resource may be a resource such as a bandwidth (BW), and the BW may be 20 MHz, 40 MHz, 80 MHz, etc. When a plurality of STA Info fields are included, the communication resource includes a resource unit (RU) or multiple resource unit (MRU), for example, the RU includes 26-tone (subcarrier), 52-tone, and so on, or the MRU includes 106+52tone, 52+26tone, and so on.

In an embodiment, the first identifier information further includes quantity information of sensing measurement setup identifiers (IDs), which identifies the number of sensing measurement setup IDs.

In an embodiment, the first identifier information is carried in a common Info field of the sensing measurement setup termination frame. Specifically, the first identifier information is carried in a control subfield of the common Info field.
the common Info field further includes a length subfield, and the length subfield identifies length information of the common Info field.

In an embodiment, the common Info field further includes uplink bandwidth (UL BW) information, receiving address (RA) information and/or transmitting address (TA) information.

The RA information is the same as the RA information of the trigger frame transmitted by the sensing initiator during the sensing measurement process (sensing measurement setup), i.e., the RA information of the sensing measurement setup termination frame is the same as the RA information of the trigger frame transmitted by the sensing initiator during the sensing measurement process.

The TA information is the same as the TA information of the trigger frame transmitted by the sensing initiator during the sensing measurement process (sensing measurement setup), i.e., the TA information of the sensing measurement setup termination frame is the same as the TA information of the trigger frame transmitted by the sensing initiator during the sensing measurement process.

In an embodiment, the UL BW information may be different from the value of the UL BW set by the trigger frame during the sensing measurement process. The UL BW information may be 20 MHz, 40 MHz, 80 MHz, 160 MHz, or 320 MHz.

In an embodiment, the transmitting the sensing measurement setup termination frame includes: during inactivation time indicated by the sensing measurement setup, after completion of the sensing measurement setup, or after completion of a measurement report corresponding to the sensing measurement setup, transmitting the sensing measurement setup termination frame.

The timing for transmitting the sensing measurement setup termination frame can be within the inactivity time indicated by the sensing measurement setup (sensing measurement process), after completion of the sensing measurement setup, or after completion of a measurement report corresponding to the sensing measurement setup.

In the embodiments of the present disclosure, the sensing measurement setup termination frame is determined, the first identifier information is carried in the sensing measurement setup termination frame, the first identifier information includes the sensing measurement setup identifier for sensing measurement setup, and the sensing measurement setup termination frame
is transmitted to achieve the termination of the sensing measurement setup, so as to improve the WLAN measurement process.

The embodiments of the present disclosure provide a communication method. The communication method may be applied to an electronic device, and the communication method may include: determining a sensing measurement setup termination frame, where the sensing measurement setup termination frame includes first identifier information, and the first identifier information includes a sensing measurement setup identifier for sensing measurement setup.

The sensing measurement setup termination frame is transmitted within the inactivity time indicated by the sensing measurement setup (sensing measurement process).

The embodiments of the present disclosure provide a communication method. The communication method may be applied to an electronic device, and the communication method may include: determining a sensing measurement setup termination frame, where the sensing measurement setup termination frame includes first identifier information, and the first identifier information includes a sensing measurement setup identifier for sensing measurement setup.

After completion of the sensing measurement setup, the sensing measurement setup termination frame is transmitted.

The embodiments of the present disclosure provide a communication method. The communication method may be applied to an electronic device, and the communication method may include: determining a sensing measurement setup termination frame, where the sensing measurement setup termination frame includes first identifier information, and the first identifier information includes a sensing measurement setup identifier for sensing measurement setup.

After completion of a measurement report corresponding to the sensing measurement setup, the sensing measurement setup termination frame is transmitted.

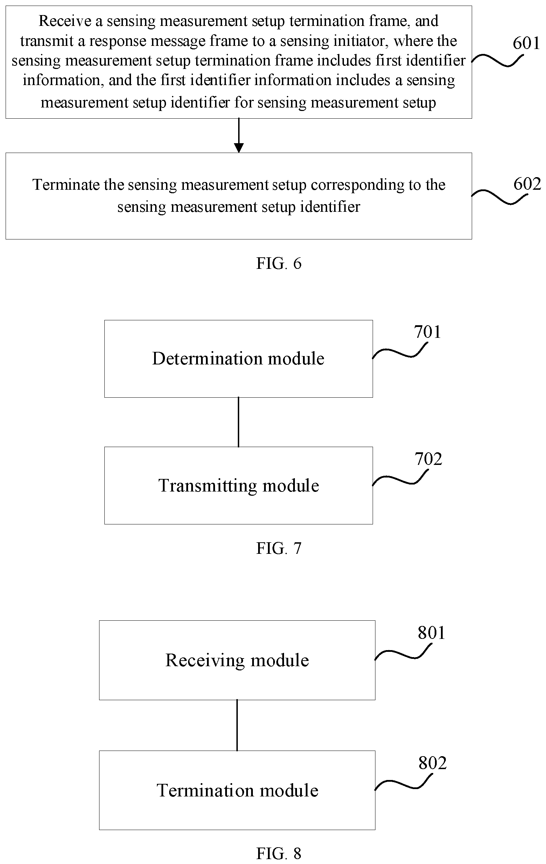

Referring to FIG. 6, the embodiments of the present disclosure provide a communication method. The communication method may be applied to an electronic device, and the electronic device may be a sensing responder. The communication method may include: may include the following steps 601 to 602.

At step 601, a sensing measurement setup termination frame is received, and a response message frame is transmitted to a sensing initiator, where the sensing measurement setup termination frame includes first identifier information, and the first identifier information includes a sensing measurement setup identifier for sensing measurement setup.

The architecture for WLAN sensing and the WLAN sensing process of the communication method provided by the embodiments of the present disclosure are referred to in the foregoing first example and will not be repeated herein.

Generally, the WLAN sensing process includes WLAN sensing session setup, WLAN sensing measurement setup and WLAN sensing measurement setup termination. The WLAN sensing process typically includes a trigger based (TB) sounding approach as well as a non-TB based sensing approach. Specifically, the TB-based approach means that the AP is an initiator or a transmitter, and the non-TB based approach means that the STA is an initiator or a transmitter. Specifically, as a second example, FIG. 5 illustrates a plurality of sensing measurement events (or sensing measurement instances) for a sensing measurement setup in a TB based scenario; where each of the sensing measurement events in examples 1 to 5 includes a polling, a sounding, and a reporting ( Reporting + Long Training Field (LTF) sec. update) ; specifically, in each example, the sounding may include one of a null data packet announcement (NDPA) sounding and a trigger frame (TF) sounding, and may include the two.

In the TB based scenario, the sensing responder will maintain the active state until the sensing measurement setup is terminated, so there is a need to provide a way to terminate the sensing measurement setup. During sensing measurement setup, the sensing initiator and each sensing responder establish a sensing measurement setup one by one. In the embodiments of the present disclosure, for the sensing measurement setup termination, the sensing initiator can terminate the sensing measurement setup with these sensing responders without having to terminate them one by one. Specifically, the sensing initiator determines and transmits the sensing measurement setup termination frame to the sensing responder, and the sensing responder receives the sensing measurement setup termination frame and transmits a response message frame to the sensing initiator.

In an embodiment, the sensing measurement setup termination frame may be a trigger frame, which is mainly used for scheduling of stations and allocation of resource units (RUs). For example, in a transmission mechanism based on an orthogonal frequency division multiple access (OFDMA) technology, uplink-OFDMA (UL-OFDMA) transmission or downlink-OFDMA (DL-OFDMA) transmission require the use of trigger frame to realize the exchange of scheduling information between multi-user communications.

The first identifier information is carried in the sensing measurement setup termination frame. The first identifier information includes a sensing measurement setup identifier (ID) for sensing measurement setup. A sensing measurement setup to be terminated is identified by the sensing measurement setup ID. The sensing measurement setup termination frame may carry one or more pieces of first identifier information. For example, when the sensing measurement setup to be terminated is one in number, the sensing measurement setup termination frame may carry one sensing measurement setup ID; when the sensing measurement setup to be terminated is at least two in number, the sensing measurement setup termination frame may carry at least two sensing measurement setup IDs. It will be understood that terminating a sensing measurement setup corresponding to a sensing measurement setup ID will not affect sensing measurement setups corresponding to other sensing measurement setup IDs, that is, terminating a sensing measurement setup identified by a sensing measurement setup ID will not affect the device/session activity of another sensing measurement setup with a different sensing measurement setup ID.

At step 602, the sensing measurement setup corresponding to the sensing measurement setup identifier is terminated.

The sensing responder transmits a response message frame to the sensing initiator and terminates the sensing measurement setup (sensing measurement process) corresponding to the sensing measurement setup identifier, and the network resource information stored in the sensing measurement process is released. In this way, when the sensing measurement setup termination frame carries at least two sensing measurement setup IDs, the sensing initiator achieves the termination of a plurality of sensing measurement processes by transmitting the sensing measurement setup termination frame once, i.e., by a single signaling interaction, such that a number of signaling interactions is reduced, the effective utilization of the spectrum is improved, and the power consumption of the sensing initiator is reduced.

In an embodiment, the sensing measurement setup termination frame includes at least one STAInfo field. The STAInfo field includes at least one of the AID, the UID, or the resource information. The AID and/or the UID are used to indicate the identity information of the sensing responder. The communication resource (or network resource) is used for the sensing responder to transmit a response message frame corresponding to the sensing measurement setup termination frame, that is, when the sensing responder feeds back the response message frame for the sensing measurement setup termination frame to the sensing initiator, the response message frame will be transmitted within the communication resource indicated by the resource information. Further, when the sensing measurement setup termination frame includes a STA Info field, the communication resource may be a resource such as a bandwidth (BW). When a plurality of STA Info fields are included, the communication resource includes a resource unit (RU) or multiple resource unit (MRU).

In an embodiment, the transmitting the response message frame to the sensing initiator includes: transmitting the response message frame in the RU corresponding to the AID; when the sensing responder feeds back the response message frame for the sensing measurement setup termination frame to the sensing initiator, the response message frame is transmitted in the RU corresponding to the AID.

In the embodiments of the present disclosure, the sensing measurement setup termination frame is received, and the response message frame is transmitted to the sensing initiator; where the sensing measurement setup termination frame includes first identifier information, which includes a sensing measurement setup identifier of the sensing measurement setup (sensing measurement process) to be terminated. The sensing measurement setup (process) corresponding to the sensing measurement setup identifier is terminated, the termination of the sensing measurement setup (process) is achieved, and the WLAN sensing measurement is improved.

Referring to FIG. 7, based on the same principle as the method provided in the embodiments of the present disclosure, the embodiments of the present disclosure also provide an electronic device, which is a sensing initiator. The electronic device includes a determination module 701 and a transmitting module 702.

The determination module 701 is configured to determine a sensing measurement setup termination frame, where the sensing measurement setup termination frame includes first identifier information, and the first identifier information includes a sensing measurement setup identifier for sensing measurement setup.

The transmitting module 702 is configured to transmit the sensing measurement setup termination frame.

In an embodiment, the sensing measurement setup termination frame includes at least one station information (STA Info) field. The STA Info field includes an association identifier (AID), a user identifier (UID), and/or resource information of communication resource, where the communication resource is for the sensing responder to transmit the response message frame corresponding to the sensing measurement setup termination frame.

In an embodiment, the first identifier information further includes quantity information of sensing measurement setup identifiers.

In an embodiment, the first identifier information is carried in a common information (Info) field of the sensing measurement setup termination frame.

In an embodiment, the first identifier information is carried in a control subfield of the common Info field; the common Info field further includes a length subfield, and the length subfield identifies length information of the common Info field.

In an embodiment, the common Info field further includes at least one of uplink bandwidth information, receiving address (RA) information or transmitting address (TA) information; the RA information is the same as RA information of a trigger frame transmitted by the sensing initiator during the sensing measurement setup; the TA information is the same as TA information of the trigger frame transmitted by the sensing initiator during the sensing measurement setup.

In an embodiment, the transmitting module 702 is configured to: during inactivation time indicated by the sensing measurement setup, after completion of the sensing measurement setup, or after completion of a measurement report corresponding to the sensing measurement setup, transmit the sensing measurement setup termination frame.

In the embodiments of the present disclosure, the determination module 701 determines the sensing measurement setup termination frame, the first identifier information is carried in the sensing measurement setup termination frame, the first identifier information includes the sensing measurement setup identifier for sensing measurement setup, and the transmitting module transmit the sensing measurement setup termination frame, such that the termination of the sensing measurement setup is achieved, so as to improve the WLAN measurement process.

The embodiments of the present disclosure provide a communication apparatus, applied to a sensing initiator, and including: a termination frame determination module and a termination frame transmitting module.

The termination frame determination module is configured to determine a sensing measurement setup termination frame, where the sensing measurement setup termination frame includes first identifier information, and the first identifier information includes a sensing measurement setup identifier for sensing measurement setup.

The termination frame transmitting module is configured to transmit the sensing measurement setup termination frame.

The apparatus also includes other modules of the electronic device in the foregoing embodiments, which will not be repeated herein.

Referring to FIG. 8, based on the same principle as the method provided in the embodiments of the present disclosure, the embodiments of the present disclosure also provide an electronic device, which is a sensing responder. The electronic device includes a receiving module 801 and a termination module 802.

The receiving module 801 is configured to receive a sensing measurement setup termination frame, and transmit a response message frame to a sensing initiator, where the sensing measurement setup termination frame includes first identifier information, and the first identifier information includes a sensing measurement setup identifier for sensing measurement setup.

The termination module 802 is configured to terminate the sensing measurement setup corresponding to the sensing measurement setup identifier.

In an embodiment, the sensing measurement setup termination frame includes at least one station information (STA Info) field. The STA Info field includes an association identifier (AID), a user identifier (UID), and/or resource information of communication resource, where the communication resource is for the sensing responder to transmit the response message frame corresponding to the sensing measurement setup termination frame.

In an embodiment, the termination module 802 is configured to transmit the response message frame in a resource unit corresponding to the AID.

In the embodiments of the present disclosure, receiving module 801 receives the sensing measurement setup termination frame, and transmits the response message frame to the sensing initiator; where the sensing measurement setup termination frame includes first identifier information, which includes a sensing measurement setup identifier of the sensing measurement setup (sensing measurement process) to be terminated. The sensing measurement setup (process) corresponding to the sensing measurement setup identifier is terminated, the termination of the sensing measurement setup (process) is achieved, and the WLAN sensing measurement is improved.

The embodiments of the present disclosure provide a communication apparatus, applied to a sensing responder, and including: a termination frame receiving module and a measurement termination module.

The termination frame receiving module is configured to receive a sensing measurement setup termination frame, and transmit a response message frame to a sensing initiator, where the sensing measurement setup termination frame includes first identifier information, and the first identifier information includes a sensing measurement setup identifier for sensing measurement setup.

The measurement termination module is configured to terminate the sensing measurement setup corresponding to the sensing measurement setup identifier.

The apparatus also includes other modules of the electronic device in the foregoing embodiments, which will not be repeated herein.

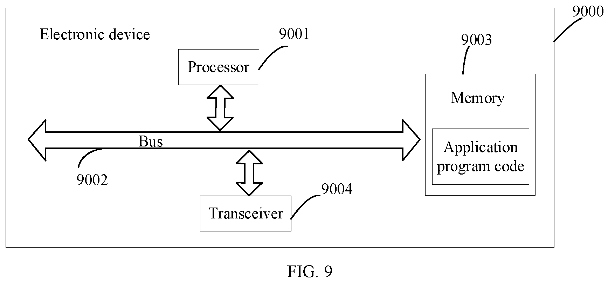

The embodiments of the present disclosure also provide an electronic device, as shown in FIG. 9, the electronic device 9000 may be a server including: a processor 9001 and a memory 9003. The processor 9001 and the memory 9003 are connected, e.g., via a bus 9002. In an embodiment, the electronic device 9000 may also include a transceiver 9004. It will be noted that the transceiver 9004 is not limited to one in number in practical applications, and the structure of the electronic device 9000 does not constitute a limitation of the embodiments of the present disclosure.

The processor 9001 may be a central processing unit (CPU), a general purpose processor, a digital signal processor (DSP), an application specific integrated circuit (ASIC), a field programmable gate array (FPGA) or other programmable logic device, a transistor logic device, a hardware component or any combination thereof. The processor 9001 may implement or perform various illustrative logical blocks, modules, and circuits described in connection with the present disclosure. The processor 9001 may also be a combination for realizing computing functions, for example, including a combination of one or more microprocessor, a combination of digital signal processor (DSP) and microprocessor, etc.

The bus 9002 may include a pathway to transfer information between the foregoing components. The bus 9002 may be a peripheral component interconnect (PCI) bus or an extended industry standard architecture (EISA) bus, and so on. The bus 9002 may include an address bus, a data bus, a control bus, and so on. For ease of representation, only a single arrow is shown in FIG. 9, but it does not mean that there is only one bus or one type of bus.

The memory 9003 may be a read only memory (ROM) or other type of static storage device that can store static information and instructions, a random access memory (RAM) or other type of dynamic storage device that can store information and instructions. It can also be an electrically erasable programmable read only memory (EEPROM), a compact disc read only memory (CD-ROM), CD-ROM) or other optical storage (including a compact disc, a laser disc, an optical disc, a digital versatile disc, a Blu-ray disc, etc.), magnetic storage medium or other magnetic storage devices, or any other medium that can be used to carry or store desired program codes in the form of instructions or data structures and can be accessed by a computer, but is not limited thereto.

The memory 9003 is configured to store the application program code for executing the scheme of the present disclosure and is controlled for execution by processor 9001. The processor 9001 is configured to execute the application program code stored in the memory 9003 to implement the foregoing method embodiments.

The electronic device includes, but is not limited to, a mobile terminal such as a cell phone, a laptop computer, a digital broadcast receiver, a personal digital assistant (PDA), a portable android device (PAD), a portable multimedia player (PMP), an on-board terminal (such as an on-board navigation terminal), as well as a stationary terminal (such as a digital TV, a desktop computer), and the like. The electronic device shown in FIG. 9 is only an example, and will not limit to the functions and use scope of the embodiments of the present disclosure.

The server provided by the present disclosure may be an independent physical server, a server cluster or distributed system including a plurality of physical servers, and a cloud server providing basic cloud computing services such as cloud services, cloud databases, cloud computing, cloud functions, cloud storage, network services, cloud communications, middleware services, field name services, security services, CDNs, and big data and artificial intelligence platforms. The terminal can be a smartphone, tablet, laptop, desktop computer, smart speaker, smartwatch, etc., but is not limited to these. The terminal and the server can be directly or indirectly connected through wired or wireless communication, and the present disclosure is not limited herein.

Embodiments of the present disclosure provide a computer-readable storage medium having computer programs stored thereon, which, when run on a computer, cause the computer to execute the corresponding contents of the foregoing method embodiments.

It will be understood that although the individual steps in the flowchart of the accompanying drawings are shown sequentially as indicated by arrows, the steps are not necessarily executed sequentially in the order indicated by the arrows. Unless expressly stated herein, there is no strict order limitation on the execution of these steps, which may be executed in some other order. At least a portion of the steps in the flowchart of the accompanying drawings may include a plurality of sub-steps or a plurality of phases, the sub-steps or phases are not necessarily executed to completion at the same moment but may be executed at different moments, and the order of execution thereof is not necessarily sequential, but may be executed in turn or in alternation with at least a portion of the other steps or sub-steps or phases of the other steps.

It will be noted that the computer-readable medium shown in the present disclosure may be a computer readable signal medium or a computer readable storage medium or any combination thereof. The computer-readable storage medium may be, but is not limited to, an electrical, magnetic, optical, electromagnetic, infrared, or semiconductor system, apparatus, or component, or any combination thereof. More specific examples of the computer readable storage medium may include, but are not limited to: an electrical connection having one or more wires, a portable computer disk, a hard disk, a random access memory (RAM), a read-only memory (ROM), an erasable programmable read only memory (EPROM or a flash memory), an optical fiber, a portable compact disk read-only memory (CD-ROM), an optical storage device, a magnetic storage device, or any suitable combination thereof. In the present disclosure, the computer readable storage medium may be any tangible medium including or storing a program, and the program may be used by or in combination with an instruction execution system, apparatus, or device. In the present disclosure, the computer readable signal medium may be a data signal included in a baseband or propagated as a part of a carrier, in which computer readable program code is carried. This propagated data signal can take many forms, including but not limited to electromagnetic signals, optical signals, or any suitable combination thereof. The computer-readable signal medium may also be any computer-readable medium other than a computer-readable storage medium, and the computer-readable medium may send, propagate, or transmit a program for use by or in combination with an instruction execution system, an apparatus, or a component. The program code contained on the computer-readable medium may be transmitted using any appropriate medium, including but not limited to: wireless, wire, optical cable, RF, etc., or any suitable combination of the foregoing.

The computer-readable medium may be included in the electronic device; or the computer-readable medium may exist independently without being assembled into the electronic device.

The computer-readable medium carries one or more programs, which, when executed by the electronic device, cause the electronic device to perform the method in the embodiments.

According to an aspect of the present disclosure, there is provided a computer program product or computer program including computer instructions which are stored in a computer-readable storage medium. The processor of the computer device reads the computer instructions from a computer-readable storage medium, executes the computer instructions, and causes the computer device to perform the methods provided in the various optional implementations.

A program code for performing the operation of the present disclosure may be written by using any combination of one or more programming languages. The programming language includes an object-oriented programming language such as Java, C++, and a conventional procedural programming language such as a "C" Language or a similar programming language. The program code may be fully executed on a computer of a user or partially executed on a computer of a user, or may be executed as an independent software package, or may be partially executed on a computer of a user and partially executed on a remote computer, or may be fully executed on a remote computer or a server. In case of the remote computer, the remote computer may be connected to the computing device of a user by using any network including a local area network (LAN) or a wide area network (WAN), or may be connected to an external computer (for example, connected to the external computer through the Internet by using an Internet service provider).

Flowcharts and block diagrams in the drawings illustrate architectures, functions, and operations that may be implemented by using the system, the method, and the computer program product according to the various embodiments of the present disclosure. In this regard, each block in the flowchart or the block diagram may represent a module, a program segment, or a part of code. The module, the program segment, or the part of the code includes one or more executable instructions for implementing a specified logical function. It will also be noted that, in some alternative implementations, the functions noted in the blocks may occur in an order different from that noted in the drawings. For example, two blocks shown in succession can actually be executed in parallel, and sometimes they can also be executed in a reverse order, depending on the functions involved. It should also be noted that each block in the block diagrams and/or flowcharts, and combinations of blocks in the block diagrams and/or flowcharts, can be implemented with dedicated hardware-based systems that perform specified functions or operations, or a combination of dedicated hardware and computer instructions.

The modules described in the embodiments of the present disclosure may be implemented in software or hardware. A name of a module does not constitute a limitation on the module itself in some cases. For example, a module A can also be described as a "module A used to perform an operation B".

The above description is only some embodiments of the present disclosure and an explanation of the applied technical principles. Those skilled in the art should understand that the scope of the invention involved in the present disclosure is not limited to a technical solution formed by a specific combination of the above technical features, but should also cover other technical solutions formed by any combination of the above technical features or their equivalents without departing from the inventive concept of the present disclosure. For example, technical solutions formed by replacing the above features with the technical features having similar functions disclosed in (but not limited to) the present disclosure.

## Claims

1. A communication method, performed by a sensing initiator, and comprising:
determining a sensing measurement setup termination frame, wherein the sensing measurement setup termination frame comprises first identifier information, and the first identifier information comprises a sensing measurement setup identifier for a sensing measurement setup; and
transmitting the sensing measurement setup termination frame.

2. The communication method of claim 1, wherein the sensing measurement setup termination frame comprises at least one station information (STA Info) field;
wherein the STA Info field comprises at least one of an association identifier (AID), a user identifier (UID), or resource information of a communication resource, and
wherein the communication resource is configured for a sensing responder to transmit a response message frame corresponding to the sensing measurement setup termination frame.

3. The communication method of claim 1, wherein the first identifier information further comprises quantity information on of sensing measurement setup identifiers.

4. The communication method of claim 1, wherein the first identifier information is carried in a common information (Info) field of the sensing measurement setup termination frame.

5. The communication method of claim 4, wherein
the first identifier information is carried in a control subfield of the common Info field, and
the common Info field further comprises a length subfield, and the length subfield identifies length information of the common Info field.

6. The communication method of claim 4, wherein the common Info field further comprises at least one of uplink bandwidth (UL BW) information, receiving address (RA) information or transmitting address (TA) information;
wherein the RA information is the same as RA information of a trigger frame transmitted by the sensing initiator during the sensing measurement setup, and
wherein the TA information is the same as TA information of the trigger frame transmitted by the sensing initiator during the sensing measurement setup.

7. The communication method of any one of claims 1 to 6, wherein the transmitting the sensing measurement setup termination frame comprises:
during inactivity time indicated by the sensing measurement setup, after completion of the sensing measurement setup, or after completion of a measurement report corresponding to the sensing measurement setup, transmitting the sensing measurement setup termination frame.

8. A communication method, performed by a sensing responder, and comprising:
receiving a sensing measurement setup termination frame, and transmitting a response message frame to a sensing initiator, wherein the sensing measurement setup termination frame comprises first identifier information, and the first identifier information comprises a sensing measurement setup identifier for a sensing measurement setup; and
terminating the sensing measurement setup corresponding to the sensing measurement setup identifier.

9. The communication method of claim 8, wherein the sensing measurement setup termination frame comprises at least one station information (STA Info) field;
wherein the STA Info field comprises at least one of: an association identifier (AID), a user identifier (UID), or resource information of a communication resource, and
wherein the communication resource is configured for the sensing responder to transmit the response message frame corresponding to the sensing measurement setup termination frame.

10. The communication method of claim 9, wherein the transmitting the response message frame to the sensing initiator comprises:
transmitting the response message frame in a resource unit corresponding to the AID.

11. A communication apparatus, applied to a sensing initiator, and comprising:
a termination frame determination module, configured to determine a sensing measurement setup termination frame, wherein the sensing measurement setup termination frame comprises first identifier information, and the first identifier information comprises a sensing measurement setup identifier for sensing measurement setup; and
a termination frame transmitting module, configured to transmit the sensing measurement setup termination frame.

12. A communication apparatus, applied to a sensing responder, and comprising:
a termination frame receiving module, configured to receive a sensing measurement setup termination frame, and transmit a response message frame to a sensing initiator, wherein the sensing measurement setup termination frame comprises first identifier information, and the first identifier information comprises a sensing measurement setup identifier for sensing measurement setup; and
a measurement termination module, configured to terminate the sensing measurement setup corresponding to the sensing measurement setup identifier.

13. An electronic device, comprising a processor, and a memory storing computer programs executable by the processor, wherein the computer programs, when executed by the processor, cause the processor to perform the communication method of any one of claims 1 to 10.

14. A computer-readable storage medium, storing computer programs thereon, wherein the computer programs, when executed by a processor, cause the processor to perform the communication method of any one of claims 1 to 10.
